(19) Europäisches Patentamt
European Patent Office
Office européen des brevets

(11) **EP 2 192 716 A2**

(12) **EUROPEAN PATENT APPLICATION**

(43) Date of publication:
**02.06.2010 Bulletin 2010/22**

(51) Int Cl.:
***H04L 9/08*** (2006.01)

(21) Application number: **09014430.4**

(22) Date of filing: **18.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **26.11.2008 US 323499**

(71) Applicant: **SAP AG**
**69190 Walldorf (DE)**

(72) Inventor: **Flegel, Ulrich**
**69190 Walldorf (DE)**

(74) Representative: **Lehmann, Judith Christina**
**Hössle Kudlek & Partner**
**Patentanwälte**
**Postfach 10 23 38**
**70019 Stuttgart (DE)**

(54) **Method and system for invalidation of crytographic shares in computer systems**

(57)    A system and method to encrypt events using a secret to serve as a key according to a secret sharing algorithm is described. In one embodiment, the key is split into shares that are distributed to an event recipient. In one embodiment, one or more shares of the key are invalidated to protect data in the encrypted event.

FIG. 2

## Description

### Field of invention

The invention relates generally to protecting information in computing systems, and, more specifically, to using cryptographic technology to protect information exchanged between two or more entities.

### Background

Organizations today focus on their core competencies to keep a competitive edge. To be able to focus on their core business activities, organizations often outsource standard processes to some provider. The provider may need to obtain access to confidential information in order to perform the outsourced processes. Another reason why an organization may expose confidential information to an external party would be to support generally accepted operation principles, such as the US GAAP (Generally Accepted Accounting Principles) and the IPPF (International Professional Practices Framework) of the IIA (Institute of Internal Auditors). As a result, external entities may have access to possibly mission critical information of the organization. The organization is faced with the dilemma of seeking the guidance and expertise of an external party, and at the same time the need to keep mission critical information confidential. This conflict of interest is usually treated on a contractual level outside of a technical system. For a more reliable protection of the information, a technical solution is desirable.

The security of software systems frequently relies on the confidentiality of secrets, such as cryptographic keys and passwords. In order to safeguard the confidentiality of a secret one may employ cryptographic secret sharing schemes (also referred to as "secret sharing algorithms") to split a secret into two or more shares. Reconstructing the secret from the shares is only possible under conditions specified on the set of shares required for reconstruction. Shares are generated and distributed in response to specified events. If an event needs to be considered in the context of secret reconstruction, such that the secret can only be reconstructed subject to a priori specified conditions. To protect event data, conditions for secret reconstruction are assigned to the events. In certain circumstances, it may be necessary to make the shares already provided to an external party unusable, such that the confidentiality of the information is protected.

### Summary

A system and method to encrypt critical event data between a sender and a recipient using secret sharing schemes is described. In one embodiment, critical data in events is encrypted using a secret and the secret is further split into shares which are distributed to the recipient. In one embodiment, shares that are already distributed are invalidated to preserve the confidentiality of encrypted event data.

### Brief Description of the Drawings

The invention is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.
In the drawings,

Figure 1 is a block diagram of an exemplary procurement process according to an embodiment of the invention;

Figure 2 is a block diagram of a system of an embodiment of the invention for generating and invalidating shares of secrets exchanged between an application and an external module;

Figure 3 is a flow diagram of an embodiment of the invention for exchanging encrypted information between an application and an external module;

Figure 4 is a flow diagram of an embodiment of the invention for invalidating previously distributed shares of secrets;

Figure 5 is a block diagram of a system of an embodiment of the invention for generating and invalidating shares of secrets exchanged between an SRM application and a fraud auditing tool.

**Detailed Description**

A system and method to protect confidential information using a secret sharing algorithm is described. In one embodiment of the invention, a system is described that encrypts critical data in events using a secret to serve as a key for the encryption. The secret is split into shares according to an encryption polynomial expression and the shares are distributed so that critical data can later be decrypted if the secret is recovered from the shares. In one embodiment, it may be necessary to invalidate one or more shares of a secret so that an event remains encrypted and protected from external parties. To invalidate one or more shares, an embodiment of the invention uses an invalidation polynomial expression. Using the invalidation polynomial expression new shares are generated. Thus, if an attempt to reconstruct the secret is made, the newly generated shares cannot be combined with the old invalidated shares to attempt to reconstruct the secret. That is, the shares may be combined but the combination will not yield the correct secret.

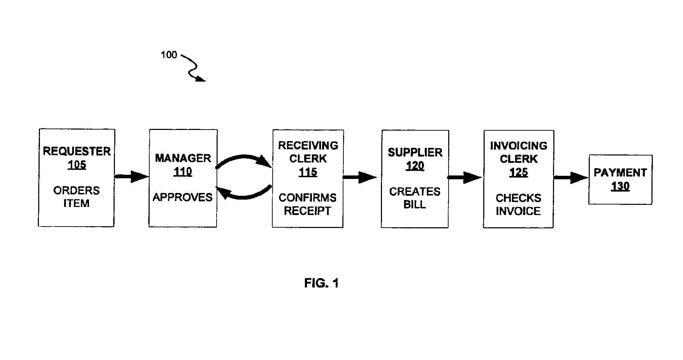

Organizations often outsource part of their operations to external service providers. To perform the service they are required to do, outsourcing partners may need access to confidential information from the outsourcing organization. For example, in a procurement process in a large company, many stakeholders interact in order for the procurement process to be executed completely. Figure 1 is a block diagram of an exemplary procurement process. Referring to Figure 1, a requester 105 orders an item. A manager 110 approves the order and a receiving clerk 115 confirms receipt. The supplier 120 receives the order and creates a bill for the order. An invoicing clerk 125 creates an invoice for the order. After all stakeholders have performed their respective tasks in the procurement process, payment 130 for the order occurs. Thus, the two companies (i.e. the company ordering the item and the supplier) exchange information to complete the procurement process 100.

Within the procurement process 100, there are possibilities for fraud, for example, an employee of the company ordering the item may be in a fraud scheme with an employee of the supplier, such as, a suspicious number of invoices may be issued over a period of time. The company may choose to hire an external auditing organization (also referred to as "fraud auditor") to monitor the procurement process and detect fraud. Such an external auditing organization is an outsourcing partner that may need access to confidential information in order to detect fraud, that is, the fraud auditor may need to monitor the occurrence of events within the procurement process 100 to detect suspicious activity. From the standpoint of the company, it is necessary to represent the data in the procurement process in some way so that the fraud auditor is able to detect suspicious events, but not obtain actual transaction data (such as names of employees, suppliers, invoice data, and so on). For the fraud auditor to be able to examine data in the procurement process, data is encrypted and provided to the fraud auditor. The data is encrypted in a linkable way. This means that identical strings have the same cryptograms. It is sufficient for the fraud auditor to monitor the cryptograms to detect fraud, for example, the fraud auditor will be able to recognize that one or more transactions are executed by the same employee or concern the same supplier (i.e., because the employee is represented by the same cryptogram in all of the examined encrypted transactions and the supplier is represented by the same cryptogram in all of the examined encrypted transactions).

To detect suspicious activity, the fraud auditor monitors the occurrence of events within the procurement process and if an event occurs more often than a specified threshold value, the fraud auditor notifies the company that the data for the event has to be decrypted for further analysis. For example, if a fraud case is detected, it is necessary to reveal the original names of the invoicing clerk approving the invoices and of the supplier to generate concrete evidence of the fraud. The fraud auditor may discover that a suspicious number of invoices with the same order number and from the same supplier are just below the limit for extra approval, and the invoices have all been checked by the same employee. In such a case, it is probable that a fraud scheme between the employee and the supplier is taking place. In order to detect the fraud, it is necessary to recognize repeated occurrences of the order number, supplier, and employee names, but it is not necessary to know the real names for the detection of this scenario.

As the above scenario has been detected using the encrypted linkable audit data, the fraud auditor would have to report the involved invoices, orders, the employee, and the supplier back to the company. By reporting this information back to the company, losses can be mitigated and future losses prevented by, for example, stopping the relationship with the supplier. In order to do so, the fraud auditor needs to decrypt the information from the audit data. However, decrypting the data for fraud detection, the auditor will also be able to analyze confidential information. The detected event is decrypted using a secret. A secret is a key (for example, a long number) that is used for the encryption and decryption of an event. If the fraud auditor has the correct key, the key can be used to decrypt the event. To ensure the security of secrets, secret sharing schemes are used. Secret sharing schemes provide a way for secrets to be split into shares. An example of a secret sharing scheme is Shamir secret sharing. However, any of a number of secret sharing schemes can be used; one example of a secret sharing scheme is a threshold scheme. Within a threshold scheme, a threshold value is chosen. The shares of the secret are distributed and only the recipients that have a number of shares that is at least equal to the threshold value can reconstruct the secret and use the secret to decrypt data. For example, if a secret is split into ten shares and a threshold value of three is chosen, any recipient of shares that has at least three shares can reconstruct the secret. If the share recipient has one or two shares, the share recipient will not be able to reconstruct the secret. Using the example above, the company that hired the fraud auditor encrypts the critical data in the events using a suitable secret. The company chooses a secret sharing algorithm, splits the secret into shares and distributes the shares to the fraud auditor for later reference. Both the company and the fraud auditor are aware of the secret sharing algorithm so that if an event that needs to be decrypted is detected, the fraud auditor will use the respective secret sharing algorithm to reconstruct the secret using the received shares. As shares are generated and distributed over time, at a given point in time the fraud auditor collects enough shares to meet the threshold value required by the secret sharing scheme to disclose protected information. However, there may be situations where there may be legitimate reasons for transactions to occur. In such cases, it may be viable for the organization to invalidate shares so that the fraud auditor cannot disclose confidential information.

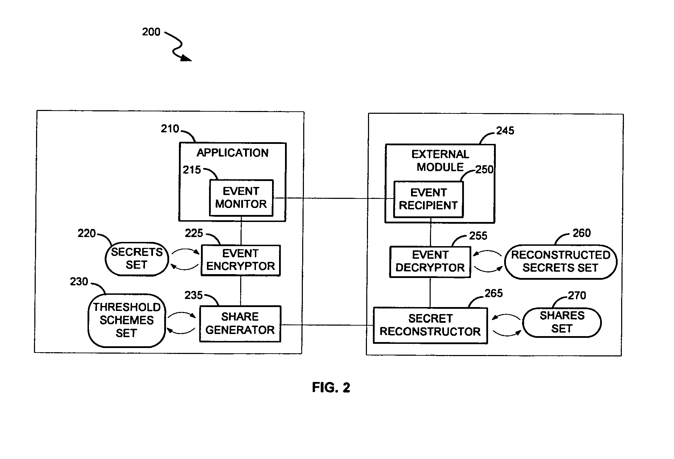

Figure 2 is block diagram of an embodiment of the invention for exchanging confidential information between an application and an external module. Referring to Figure 2, an application 210 communicates with an external module 245. The application 210 is the provider of the information and thus has the need to protect the information it exchanges with the external module 245. The application 210 uses an event encryptor 225 to encrypt critical data in events using a suitable secret from the secrets set 220. Critical data in events is encrypted using the selected secret as a key. The secret is then split into shares according to a secret sharing scheme, such as a threshold scheme. The share generator 235 selects a threshold scheme from a set of schemes 230 and splits the secret into shares. The shares are sent to the secret reconstructor 265 and kept in the shares set 270 for later usage. Within daily operations, the external module 245 continuously analyses events via the event recipient module 250. If certain events occur frequently, the external module 245 may detect that it needs to disclose protected information for further analysis of the events. It notifies the event decryptor 255 to provide the information. The event decryptor 255 invokes the secret reconstructor 265 to reconstruct the secret from the received shares in the shares set 270. The secret reconstructor 265 is aware of the used threshold scheme and using the same threshold scheme as the share generator 235, secret reconstructor 265 collects enough shares from the share set 270 to reconstruct the secret and sends the secret to the reconstructed secrets set 260. Using the reconstructed secret, the event decryptor 255 decrypts the event and provides the event to the external module 245 for further analysis.

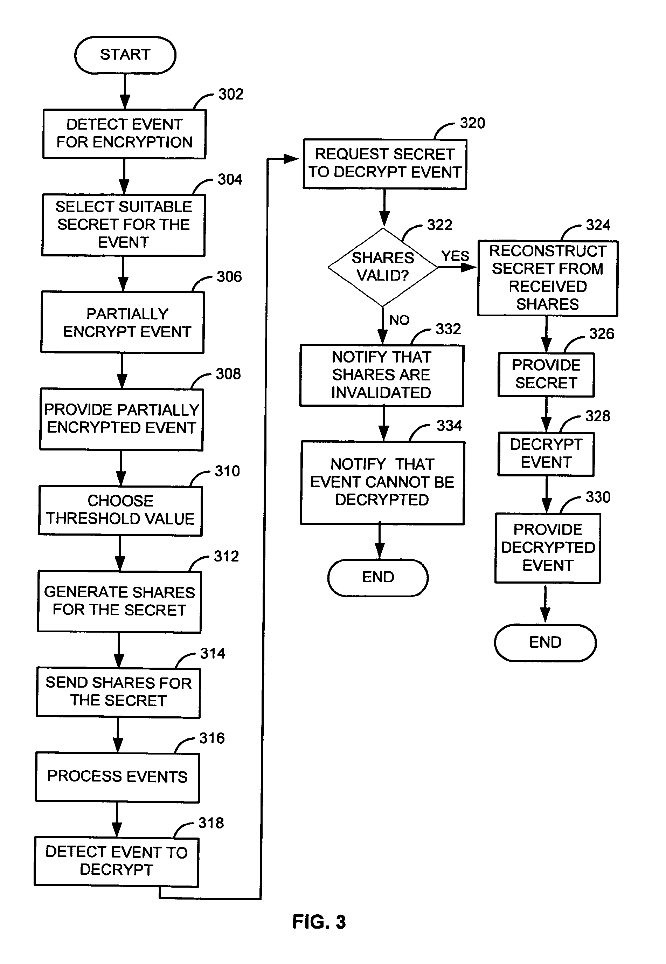

Figure 3 is a flow diagram of an embodiment of the invention for encrypting and decrypting events using a secret sharing algorithm. Referring to Figure 3, at process block 302, an event for encryption is detected. The event is identified to have critical data in it and has to be encrypted. At process block 304, a suitable secret for the event is selected. The secret will serve as a key to protect the critical data in the event. At process block 306, the event is partially encrypted using the secret. The event is partially encrypted because only the critical data in the event is encrypted. At process block 308, the partially encrypted event is sent out. At process block 310, a threshold value is chosen. The threshold value is the number of shares of the secret that will be sufficient to reconstruct the secret. At process block 312, shares are generated for the secret. At process block 314, the generated shares are distributed. At process block 316, events are continuously monitored for the rate of occurrence until, at process block 318, an event is detected to have reached the threshold for occurrence and is detected for decryption. At process block 320, the respective secret to decrypt the event is requested. At process block 322, the received shares for the secret are checked for validity, and if they are valid, at process block 324, the secret is reconstructed from the valid shares. At process block 326, the secret is reconstructed from the shares. At process block 328, the secret is used to decrypt the event. At process block 330, the decrypted event is provided for analysis. If at process block 322 the one or more shares of the secret are estimated to be invalid, a notification is sent that the secret cannot be reconstructed at process block 332. At process block 334, a notification is sent that the event cannot be decrypted and provided.

In one embodiment of the invention, the process as described in Figure 3 is performed by components as described in Figure 2. Referring to Figure 2 and 3, at process block 302, the event monitor 215 detects an event for encryption. The event is identified to have critical data in it and has to be encrypted. At process block 304, the event encryptor 225 selects a suitable secret for the event from the secrets set 220. The secret will serve as a key to protect the critical data in the event. At process block 306, the event encryptor 225 encrypts part of the data in the event using the secret. The event is partially encrypted because only the critical data in the event is encrypted. At process block 308, the partially encrypted event is provided to the event monitor 215 and sent to the event recipient 250. At process block 310, the share generator 235 chooses a threshold value. The threshold value is the number of shares of the secret that will be sufficient to reconstruct the secret, for example, if the secret is split in ten shares and the threshold value is three, this means that any three of the ten shares will be sufficient to reconstruct the secret. At process block 312, the share generator 235 generates the shares for the secret, and, at process block 314, sends the generated shares to the secret reconstructor 265. The secret reconstructor 265 places the received shares in the shares set 270 for later reference. In one embodiment of the invention, the share generator 235 does not generate all shares of the secret at the same time but generates shares over time and chooses how to distribute them to the secret reconstructor 265.

At process block 316, the external module 245 continuously monitors events for the rate of occurrence until, at process block 318, the external module 245 detects an event that has reached the threshold for occurrence. The external module 245 invokes the event decryptor 255 to decrypt the event. The event decryptor 255 retrieves the respective secret from the reconstructed secrets set 260 and decrypts the event. If the secret is not available in the reconstructed secrets set 260, at process block 320, the event decryptor 255 invokes the secret reconstructor 265 to reconstruct the secret from the shares set 270. At process block 322, the secret reconstructor 265 checks if the received shares for the secret are valid, and if they are valid, at process block 324, the secret reconstructor 265 reconstructs the secret from the valid shares. At process block 326, the secret reconstructor 265 provides the secret to the event decryptor 255. At process block 328, the event decryptor 255 uses the provided secret to decrypt the event. After decrypting the event, the event decryptor 255 provides the event to the external module 245, at process block 330. If at process block 322, one or more shares of the secret are estimated to be invalid, the secret reconstructor 265 sends a notification to the event decryptor 255 that the secret cannot be reconstructed, at process block 332. At process block 334, the event decryptor 255 sends a notification to the external module 245 that the event cannot be decrypted.

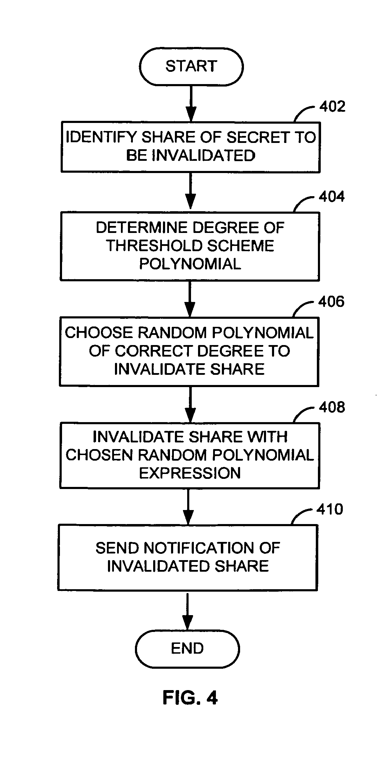

Figure 4 is a flow diagram of an embodiment of the invention for invalidating shares of a secret. As companies communicate with external partners, there are numerous transactions that take place over a given period of time. Some of these transactions may be legitimate and some of them may be fraudulent. In order to monitor transactions for fraud, outsourcing partners monitor events for the occurrence of specific conditions. An outsourcing partner monitors events in encrypted form, monitoring the relationships between stakeholders and items, and the rate of occurrence of certain relationships as required by the organization that hired them. If a number of transactions are suspicious, the outsourcing partner would move to disclose the confidential information to estimate why the suspicious activity has occurred. In some cases, a transaction may comply with the monitored conditions and thus may be deemed a subject to fraud but still it may be a legitimate transaction. That is, there may be a legitimate reason for the transaction to have exhibited a behavior to comply with the fraud conditions. In such cases, the organization that hired the outsourcing partner to monitor its operations would prefer to keep the confidential information confidential. To prevent the outsourcing partner from disclosing confidential information in such special cases, the organization may choose to invalidate shares that have already been released to the outsourcing partner in order to protect the confidentiality of critical information. Shares of a secret are generated according to a secret sharing algorithm. The secret sharing algorithm uses a polynomial expression of a chosen degree to generate shares. The polynomial expression consists of randomly chosen coefficients and the secret. Referring to Figure 4, at process block 402, an already distributed share of a secret is identified to be invalidated. At process block 404, the degree of the secret sharing algorithm polynomial is determined. At process block 406, a new polynomial is constructed and added to the original polynomial. The new polynomial is of the same degree as the original polynomial. At process block 408, a new share is generated with the chosen random polynomial expression. At process block 410, a notification is sent that the share has been invalidated. Thus, if there is an attempt to combine the generated new share with already generated and now invalidated shares, the combination of these shares will not yield the correct secret.

In another embodiment of the invention, the process is described in Figure 4 is performed by components as described in Figure 2. Referring to Figures 2 and 4, at some point in time the application 210 estimates that critical data in an event has to be protected and notifies the event encryptor 225. The event encryptor 225 invokes the share generator to invalidate one or more shares of the secret used to encrypt the event. The share generator has already generated and distributed the shares. At process block 402, the share generator 235 identifies a share from the already distributed shares to invalidate. The share generator 235 determines the degree of the polynomial expression used to generate the shares, at process block 404. At process block 406, the share generator 235 chooses a random polynomial of the determined degree to add to the original polynomial used to compute the shares. At process block 408, the share generator 235 generates a new share with the chosen random polynomial expression. At process block 410, the share generator 235 sends notification to the secret reconstructor 265 that the share has been invalidated. Thus, if the secret reconstructor 265 attempts to combine the generated new share with already received and now invalidated shares, the combination of these shares will not yield the correct secret.

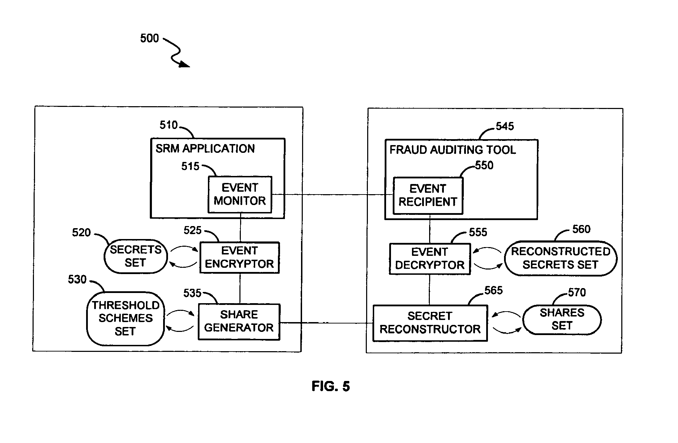

In another embodiment of the invention, a system to analyze transactions for fraud in a Supplier Relationship Management ("SRM") application is described. Figure 5 is a block diagram of an embodiment of the invention for exchanging encrypted events between an SRM application and a fraud auditing tool. The goal of the fraud auditing tool is to analyze events that occur in the SRM application. Referring to Figure 5, the SRM application 510 employs an event monitor 515 to monitor events. If the event monitor 515 detects an event for encryption, it invokes an event encryptor 525 to encrypt critical data in the event. The event encryptor 525 chooses a suitable secret from the secrets set 520 and encrypts the critical data in the event. The event encryptor 525 sends the partially encrypted event to the event recipient 550. The event recipient 550 provides the event to the fraud auditing tool 545 for analysis. The event encryptor 525 invokes the share generator 535 to generate shares for the used secret using a polynomial expression stored in the threshold schemes set 530. The share generator 535 chooses a threshold value for the polynomial expression where the threshold value specifies the number of shares that will be sufficient to reconstruct the secret. The share generator 535 generates the shares using the chosen polynomial and sends the shares to the secret reconstructor 565. The secret reconstructor 565 places the received shares in the shares set 570 for later reference. The fraud auditing tool 545 analyzes received events and if the events reach a specified condition, notifies the event decryptor 555 to decrypt the event for further analysis. The event decryptor 555 checks if the secret to decrypt the event is available in the reconstructed secrets set 560. If the secret is not available, the event decryptor 555 invokes the secret reconstructor 565 to reconstruct the secret form the shares set 570. After the event is successfully decrypted, the fraud auditing tool can perform further analysis and generate proof of fraud with concrete data as evidence.

In one embodiment of the invention, the process as described in Figure 3 is performed by components as described in Figure 5. Referring to Figures 3 and 5, at process block 302, the event monitor 515 detects an event for encryption and invokes the event encryptor 525. At process block 304, the event encryptor 525 selects a suitable secret for the event using the statement select_secret( ), for example the secret may be s = "1234". At process block 306, the event encryptor 525 uses the secret s to encrypt some data in the event using the statement partially_encrypt_event(). At process block 308, the event encryptor 525 sends the partially encrypted event to the event recipient 550 using the statement provide_partially_encrypted_event( ). At process block 310, the event encryptor 525 invokes the share generator 535 to generate shares for the secret. The share generator 535 chooses a threshold value, for example t = "3". At process block 312, the share generator 535 constructs a polynomial expression as chosen according a scheme from the threshold schemes set 530 using the statement generate_share( ). In one embodiment, the polynomial is constructed using Shamir's threshold scheme. The polynomial is constructed to comply with a number of conditions. Shares s1,..., sn are shares of a secret s and s'1, ...,s'n are shares of a secret s'. Then, s1+ s'1...sn+s'n are shares of the secret s+s'.

The general form of the polynomial according to Shamir's threshold scheme is $\sum_{i=0}^{t-1} a_i x^i$. For example, the constructed polynomial p is of degree t-1 = 2 : p(x)= 1234 + 166x + 94x2, where "1234" is the chosen secret and the coefficients "166" and "94" are chosen randomly. Using the polynomial expression, the share generator 535 generates the following three shares: s1 = p(1) = "1494", s2 = p(2) = "1942", and s3 = p(3) = "2578". At process block 314, the share generator 535 sends the generated shares to the secret reconstructor 565 using the statement release_shares ( ). At process block 316, the fraud auditing tool 545 processes and analyzes events. At process block 318, the event recipient 550 detects an event for further analysis and invokes the event decryptor 555 with the statement decrypt_event ( ). At process block 320, the event decryptor 555 invokes the secret reconstructor 565 to reconstruct the secret. At process block 322, the secret reconstructor 565 checks if the received shares in the shares set 570 are valid, and, at block 324, reconstructs the secret. In one embodiment, the secret reconstructor 565 interpolates p(x) from s1 through to s3 using Lagrange Interpolation as follows:

$$1494(3 - (5/2)^*x + (1/2)^*x^2) + 1942(-3 + 4x - x^2) +$$

$$2578(1 - (3/2)^*x + (1/2)^*x^2) = 4482 - 5826 + 2578 +$$

$$x(-3735 + 7768 - 3867) + x^2(747 - 1942 + 1289) = 1234 + 166x + 94x^2 = p(x)$$

Thus, the secret reconstructor 565 yields the secret "1234" and passes the secret to the event decryptor 555, at process block 326. At process block 328, the event decryptor 555 decrypts the event using the statement decrypt_event( ) with "1234" as the parameter. At process block 330, the event decryptor 555 passes the decrypted event to the event recipient 550 and the event recipient notifies the fraud auditing tool 545 that the event is available for further analysis. If at process block 322 the secret reconstructor 565 estimates that the shares are invalid, secret reconstructor 565 notifies the event decryptor 555 at process block 332 that the shares are invalidated and the secret cannot be reconstructed. At process block 334, the event decryptor 555 notifies the event recipient 550 that the event cannot be decrypted.

As mentioned above, there may be cases in which confidential information should not be disclosed, for example, the SRM application 510 estimates that extra invoices are legitimate and in such cases, the SRM application 510 may need to invalidate shares of a secret for an already provided event. To invalidate shares, the SRM application 510 uses the process as described in Figure 4. The SRM application 510 invokes the event encryptor 525 to start the invalidation process. The event encryptor notifies the share generator 535 that one or more shares of a secret have to be invalidated, for example, the secret s = "1234". Referring to Figures 4 and 5, at process block 402, the share generator has generated shares s1, s2, and s3, as given above, but has only released shares s1 and s2. The share generator identifies share s2 to be invalidated. At process block 404, the share generator 535 determines the degree of p(x). At process block 406 the share generator 535 uses the statement invalidate_shares() to construct a new polynomial b(x) which satisfies the following conditions:

1. $b(x_i) = 0$, if $i \in \{1,....,k\}\backslash\{j\}$
2. $b(x_j) \neq 0$
3. $b(0) = 0$
4. The degree of b(x) is less than or equal to t - 1
5. b(x) is random with respect to conditions 1-4 above

To satisfy all conditions above, b(x) is split into two factors:

$$c(x) = x(x - 1) = -x + x^2$$

and

$$d(x) = 17$$

and

$$b(x) = c(x)*d(x) = -17x + 17x^2.$$

At process block 408, the share generator 535 invalidates the share by adding b(x) to p(x), which yields

$$p(x) = 1234 + (166 - 17)x + (94 + 17)x^2 = 1234 + 149x + 111x^2$$

At process block 410, the share generator 535 sends notification to the secret reconstructor 565 that share s2 has been invalidated using the statement notify_invalid_shares( ). If the secret reconstructor 565 attempts to use the invalidated share to reconstruct the secret, the secret reconstructor 565 will not be able to reconstruct s = "1234":

$$1494(3 - (5/2)*x + (1/2)*x^2) + 1942(-3 + 4x - x^2) +$$

$$2680(1 - (3/2)*x + (1/2)*x^2) = 4482 - 5826 + 2680 +$$

$$x(-3735 + 7768 - 4020) + x^2(747 - 1942 + 1340) = 1336 + 13x + 145x^2$$

Using the invalidated share yields the secret "1336". Thus, by invalidating a share the SRM application can ensure that the confidentiality of information is preserved.

Elements of embodiments of the invention described herein may also be provided as a machine-readable medium for storing the machine-executable instructions. The machine-readable medium may include, but is not limited to, flash memory, optical disks, CD-ROMs, DVD ROMs, RAMs, EPROMs, EEPROMs, magnetic or optical cares, or other type of machine-readable media suitable for storing electronic instructions.

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

In the foregoing specification, the invention has been described with reference to the specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

**Claims**

1. A computing system, comprising:

   an event encryptor module (225, 525) to encrypt an event using a secret;
   a share generator module (235, 535) to invalidate a previously generated share of a secret responsive to receiving notification from the event encryptor (225, 525);
   a secret reconstructor module (265, 565) to reconstruct secrets from shares, the secret reconstructor (265, 565) further to receive notification from the share generator module (235, 535) indicating that the share of the secret is invalid; and
   an event decryptor module (255, 555) to decrypt events using the secret reconstructed by the secret reconstructor module (265, 565).

2. The system according to claim 1, further comprising an application module (210, 510) to send the encrypted event to an external module (245, 545), wherein the application module (210, 510) comprises an event monitor module (215, 515) to monitor events, the event monitor module (215, 515) to invoke the event encryptor (225, 525) to partially encrypt the event and the external module (245, 545) comprises an event recipient module (250, 550) to receive the encrypted event.

3. A computer-implemented method, comprising:

   identifying (402) a share of a set of shares of a secret to be invalidated;
   generating (406) an invalidation polynomial expression; and
   generating (408) a new share of the secret with the generated invalidation polynomial expression, wherein the invalidation polynomial expression can be generated one or more times over a period of time to invalidate one or more shares over the period of time.

4. The method according to claim 3, further comprising determining (404) a degree of an encryption polynomial expression wherein the encryption polynomial expression is composed of a key and one or more constants.

5. The method according to any one of claims 3 or 4, further comprising:

   partially encrypting an event using the secret;
   processing the event at an external processing module, responsive to receiving the event at an event recipient; and
   decrypting the received event.

6. The method according to any one of claims 3 to 5, further comprising:

   generating the set of shares from the secret using an encryption polynomial expression;
   distributing the generated shares of the secret; and
   reconstructing the secret using the generated shares.

7. The method according to claim 5 or 6, wherein processing the event at an external processing module comprises:

   monitoring the received event for a set of conditions and relationships with one or more other events; and
   monitoring a rate of occurrence of the event.

8. The method according to claim 7, wherein monitoring the rate of occurrence of the event comprises:

specifying a threshold value for the rate of occurrence of the event; and
detecting the rate of occurrence of the event reaching the threshold value.

9. A machine readable medium having instructions therein that when executed by the machine, cause the machine to:

identify a share of a set of shares of a secret to be invalidated;
generate an invalidation polynomial expression; and
generate a new share of the secret with the generated random invalidation polynomial expression.

10. The machine-readable medium according to claim 9, further comprising instructions that cause the machine to determine a degree of an encryption polynomial expression.

11. The machine-readable medium according to claim 9 or 10, further comprising instructions that cause the machine to generate the invalidation polynomial expression one or more times over a period of time to invalidate one or more shares over the period of time.

12. The machine-readable medium according to any one of claims 9 to 11, further comprising instructions that cause the machine to:

partially encrypt an event using the secret;
process the event at an external processing module, responsive to receiving the event at an event recipient; and
decrypt the received event.

13. The machine-readable medium according to any one of claims 9 to 12, further comprising instructions that cause the machine to:

generate the set of shares from the secret using an encryption polynomial expression;
distribute the generated shares of the secret; and
reconstruct the secret using the generated shares.

14. The machine-readable medium according to claim 12 or 13, wherein instructions causing the machine to process the event at an external processing module, cause the machine to:

monitor the received event for a set of conditions and relationships with one or more other events; and
monitor a rate of occurrence of the event.

15. The machine-readable medium according to claim 14, wherein instructions causing the machine to monitor the rate of occurrence of the event, cause the machine to:

specify a threshold value for the rate of occurrence of the event; and
detect the rate of occurrence of the event reaching the threshold value.

100

| REQUESTER<br>**105**<br><br>ORDERS<br>ITEM | MANAGER<br>**110**<br><br>APPROVES | RECEIVING<br>CLERK<br>**115**<br><br>CONFIRMS<br>RECEIPT | SUPPLIER<br>**120**<br><br>CREATES<br>BILL | INVOICING<br>CLERK<br>**125**<br><br>CHECKS<br>INVOICE | PAYMENT<br>**130** |

FIG. 1

200

210
APPLICATION

215
EVENT
MONITOR

220
SECRETS
SET

225
EVENT
ENCRYPTOR

230
THRESHOLD
SCHEMES
SET

235
SHARE
GENERATOR

245
EXTERNAL
MODULE

250
EVENT
RECIPIENT

255
EVENT
DECRYPTOR

260
RECONSTRUCTED
SECRETS SET

265
SECRET
RECONSTRUCTOR

270
SHARES
SET

**FIG. 2**

**FIG. 3**

START

IDENTIFY SHARE OF SECRET TO BE INVALIDATED — 402

DETERMINE DEGREE OF THRESHOLD SCHEME POLYNOMIAL — 404

CHOOSE RANDOM POLYNOMIAL OF CORRECT DEGREE TO INVALIDATE SHARE — 406

INVALIDATE SHARE WITH CHOSEN RANDOM POLYNOMIAL EXPRESSION — 408

SEND NOTIFICATION OF INVALIDATED SHARE — 410

END

**FIG. 4**

500

510

SRM APPLICATION

515

EVENT
MONITOR

520

SECRETS
SET

525

EVENT
ENCRYPTOR

530

THRESHOLD
SCHEMES
SET

535

SHARE
GENERATOR

545

FRAUD AUDITING TOOL

550

EVENT
RECIPIENT

555

EVENT
DECRYPTOR

560

RECONSTRUCTED
SECRETS SET

565

SECRET
RECONSTRUCTOR

570

SHARES
SET

**FIG. 5**